# EUROPÄISCHE PATENTSCHRIFT

(11) **EP 1 747 426 B1**
(45) Veröffentlichungstag und Bekanntmachung des Hinweises auf die Patenterteilung: **10.03.2010**
(21) Anmeldenummer: 05731709.1
(22) Anmeldetag: 31.03.2005
(51) Int. Cl.: G01C 21/32

(54) **VERFAHREN ZUR UNTERTEILUNG UND BERECHNUNG EINES STRASSENVERLAUFES**
METHOD FOR SUBDIVIDING AND CALCULATING THE COURSE OF A ROAD
PROCEDE POUR SUBDIVISER ET CALCULER UN TRACE DE ROUTE

(30) Priorität: 12.05.2004 DE 102004023399
(43) Veröffentlichungstag der Anmeldung: 31.01.2007
(73) Patentinhaber: ROBERT BOSCH GMBH, 70442 Stuttgart (DE)
(72) Erfinder: VOGT, Wilhelm, 33165 Lichtenau (DE); KERSKEN, Ulrich, 31199 Diekholzen (DE); VARCHMIN, Axel, 31180 Giesen (DE)
(86) Internationale Anmeldenummer: PCT/EP2005/051469
(87) Internationale Veröffentlichungsnummer: WO 2005/111543

(56) Entgegenhaltungen:
- EP-A- 0 943 895
- DE-A1- 10 051 745
- DE-C1- 10 114 412
- US-B1- 6 366 927

## Beschreibung

Die vorliegende Erfindung betrifft ein Verfahren zur Unterteilung des Straßenverlaufes in digitalen StraBenkarten in Segmente, bei dem ausgehend von digitalen Straßenkarten, in denen der Straßenverlauf in aufeinanderfolgende Segmente unterteilt ist, neue Segmentgrenzen über neue Segmentanfangs- und Segmentendpunkte festgelegt werden sowie ein Verfahren zur Berechnung des Straßenverlaufs anhand von digitalen Straßenkarten, bei dem die Straße in aufeinanderfolgende Segmente unterteilt ist, denen ein Segmentanfangspunkt und ein Segmentendpunkt zugeordnet ist.

Digitalisierte Straßenkarten finden unter anderem in Navigationssystemen für Kraftfahrzeuge Anwendung. Die Information über das Straßennetz ist mit Hilfe von Segmentanfangs- und Segmentendpunkten auf einem Datenträger, beispielsweise einer CD-ROM, abgespeichert.

Aus der DE 101 14 412 C1 ist eine Verfahren zur Erzeugung einer Straßennetzkarte bekannt, bei dem der Straßenverlauf zwischen einem Segmentanfangs- und Segmentendpunkt mittels einer Klothoide beschrieben wird. Die jeweilige Position des Fahrzeuges oder der Verlauf des Straßensegmentes wird errechnet.

Ein alternatives Verfahren ist ebenfalls in der DE 101 14 412 C1 beschrieben, bei dem der Straßenverlauf zwischen einem Segmentanfangs- und Segmentendpunkt mittels einer Gerade beschrieben wird. Je nach Krümmung des Straßenverlaufs haben die Segmentanfangs- und Segmentendpunkte unterschiedliche Abstände, da eine Bedingung lautet, dass die direkte Verbindung zwischen einem Segmentanfangs- und Segmentendpunkt den realen StraBenverlauf nicht verlassen darf. Das heißt, bei kurvigen Straßenverläufen steigt die Anzahl der Segmentanfangs- und Segmentendpunkte und damit auch die abzuspeichernde Datenmenge.

Die Zusammensetzung von jeweils linearen Teilstücken bewirkt, dass bei der Berechnung der Länge einer Wegstrecke ein Längenfehler erzeugt wird. Zudem reichen die Genauigkeit und Qualität der Segmentanfangs- und Segmentendpunkte und des virtuellen Straßenverlaufs nicht aus, um die Krümmungsverhältnisse der Fahrtstrecke derart genau berechnen zu können, dass beispielsweise für ein Kurvenwarnsystem und/oder weitere Fahrzeugassistenzsysteme eine zuverlässige Funktion realisiert werden kann.

Die US 6,366,927 B1 betrifft ein Verfahren und ein System zur Darstellung und Verwendung von Forminformationen in geografischen Datenbanken. Zur Darstellung eines Straßenverlaufes wird dieser in Segmente mit Segmentanfangs- und Segmentendpunkten unterteilt, wobei der Verlauf der Straße zwischen den Segmentanfangs- und Segmentendpunkten über ein Attribut bezüglich der Gestalt des Segmentes festgelegt wird. Bei Segmenten, die keinen geraden Verlauf haben, wird der Verlauf über zwei oder mehr Parameter dargestellt, beispielsweise über eine Bezierkurve.

Aufgabe der vorliegenden Erfindung ist es folglich, ein verbessertes Verfahren bereitzustellen, mit dem eine effiziente Berechnung eines Verlaufs einer Straße aus in digitalisierten Straßenkarten gespeicherten Segmentanfangs- und Segmentendpunkten möglich ist.

Diese Aufgabe wird durch ein Verfahren gemäß den Merkmalen des Anspruchs 1 gelöst.

Erfindungsgemäß werden ausgehend von digitalen Straßenkarten, in denen der Straßenverlauf in aufeinanderfolgende Segmente unterteilt ist, neue Segmentgrenzen über neue Segmentanfangs- und Segmentendpunkte festgelegt, indem die Segmentanfangs- und Segmentendpunkte so gewählt werden, dass sich die Gestalt der Segmente zwischen den Segmentanfangs- und Segmentendpunkten nicht ändert, also z.B. eine Gerade, ein Kreissegment oder eine Kurve bleibt und die Segmentgrenzen genau eine Gestalt einschließen. Die Segmentgrenzen sind dabei in der Regel verschieden von der bisherigen Position der Segmentanfangs- und Segmentendpunkte, die im folgenden auch als Shapepoints oder Stützpunkte bezeichnet werden. Die neuen Segmente haben eine Gestalt von z. B. Geraden, Kreisbögen und Klothoiden. Es werden somit neue Shapepoints berechnet, die auf einem Datenträger abgelegt werden. Da nun die Segmentgrenzen präzise bekannt sind, wird die Berechnung von Krümmungen auf der Grundlage von Shapepoints deutlich erleichtert, weil durch die exakte Festlegung der Segmentgrenzen die Berechnung des Straßenverlaufes wesentlich erleichtert wird.

Zwischen den Segmentgrenzen werden weitere Stützpunkte benötigt, um jeweils den Verlauf innerhalb der Segmentgrenzen zu bestimmen. Dies geschieht beispielsweise dadurch, dass die

Anzahl der Stützpunkte zwischen den Segmentanfangs- und Segmentendpunkten die Form des Verlaufes, also Gerade, Kreis, Klothoide oder dergleichen, festlegt. Dies kann beispielsweise auch in Abhängigkeit von der Straßenklasse erfolgen, beispielsweise können für Autobahnen zwei zusätzliche Stützpunkte innerhalb eines Segmentes eine Klothoide festlegen, während es bei Kreisstraßen ein Polynom dritten Grades sein kann. Es erfolgt somit eine an die Straßenklasse angepasste Behandlung. Darüber hinaus könnten auch weitere Attribute wie z.B. "einspurige Straße", mehrspurige Straße", "Kreisverkehr" oder dergleichen berücksichtigt werden. Wenn anhand der Stützpunktanzahl die Gestalt des Segmentes bzw. die Form des Straßenverlaufes festgelegt ist, kann die entsprechende Formel identifiziert werden, um aus den Positionen der Segmentanfangs- und -endpunkte und den Stützpunkten den genauen Verlauf für diese Form des Verlaufes zu berechnen. Für ein Polynom dritten Grades beispielsweise würde ein Gleichungssystem mit vier Gleichungen der Form yᵢ=a+bxᵢ+cxᵢ²+dxᵢ³ gelöst werden müssen, wobei xᵢ und yᵢ jeweils den auf die Erdoberfläche projizierten Segmentanfangs- und Endpunktpositionen sowie den Stützpunktpositionen entspricht.

Eine weitere Möglichkeit besteht in der Verwendung zusätzlicher Bedingungen wie eine zweimal stetige Differenzierbarkeit an den Segmentgrenzen, so dass sich zusätzliche Zwangsbedingungen für den Verlauf der Straße und ggf. auch für die Gestalt der Segmente ergeben, so dass innerhalb der Segmente Stützpunkte eingespart werden können. Somit kann nicht nur über die Anzahl der zwischen den Segmentgrenzen vorhandenen Stützpunkte, sondern ergänzend über die Übergangsbedingungen, die zwischen den Segmenten definiert sind, oder die Gestalt des Segmentes bzw. unter zusätzlicher Berücksichtigung der Lage der Segmentgrenzpunkte und/oder weiterer Attribute außerdem noch der Verlauf der Straße festgelegt werden.

Durch das beschriebene Verfahren ist es möglich, die bisherigen Navigationsalgorithmen weiterhin betreiben zu können, weil die Darstellung der Stützpunkte sowie der Segmentanfangs- und Segmentendpunkte als solche weiterhin in den Daten vorhanden ist, jedoch sind die Segmentanfangs- und Segmentendpunkte sowie die Stützpunkte intelligent modifiziert, so dass gleichzeitig eine eindeutige, hochgenaue Krümmungsberechnung mit deutlich verminderter Komplexität durchgeführt werden kann. Die Datenmenge ist bei höherer Genauigkeit reduziert. Die Ortung eines Fahrzeuges auf dem Straßennetz kann genauer erfolgen. Der Straßenverlauf kann exakt visualisiert werden.

Die Erfindung sieht weiterhin vor, dass die Straße in Segmente unterteilt und jedem Segment zumindest ein Anfangspunkt und ein Endpunkt zugewiesen wird. Um Informationen über die Gestalt des Segmentes zu erhalten, wird die Anzahl von Stützpunkten verwendet, die zwischen dem Segmentanfangs- und Segmentendpunkt vorgesehen ist und/oder Übergangsbedingungen zwischen den Segmenten, beispielsweise ein stetiger Übergang. Anhand der Anzahl der zwischen den Segmentanfangs- und Segmentendpunkten angeordneten Stützpunkten und/oder den Übergangsbedingungen zwischen den Segmenten wird die Gestalt des Segmentes festgelegt, und anhand der Lage der Segmentanfangs- und Segmentendpunkte und der Stützpunkte zueinander wird der Verlauf der Straße oder des Segmentes berechnet. Zur Berechnung des Verlaufes wird dabei der oder werden die Stützpunkte herangezogen, sofern ein solcher oder solche vorhanden ist/sind. Dadurch wird erreicht, dass bei einer minimalen, abgespeicherten Datenmenge eine optimale Verlaufsberechnung erfolgen kann. Verläuft die Straße im entsprechenden Segment näherungsweise kreisbogenförmig, so wird ein zusätzlicher Stützpunkt diesem Segment zugeordnet. Über den Anfangs- und Endpunkt sowie den weiteren Stützpunkt, der auf dem Kreisbogenabschnitt liegt, kann der Verlauf der Straße berechnet werden. Schließlich können einem Segment zwei oder mehr zusätzliche Stützpunkte zugeordnet werden, wenn die Straße im entsprechenden Abschnitt kurvenförmig verläuft. Kann der Verlauf der Straße als Klothoide beschrieben werden, sind zwei Stützpunkte vorgesehen, für komplexere Verläufe, die als Polynom dargestellt werden müssen, sind eine entsprechende Anzahl an Stützpunkten vorgesehen, um ausreichend Randbedingungen zur Lösung des Polynoms zur Verfügung zu haben.

Vorteilhafte Ausführungsformen des erfindungsgemäßen Verfahrens sehen vor, dass das Segment als eine Gerade betrachtet wird, wenn kein zusätzlicher Stützpunkt zugeordnet wird. Für den Fall, dass der Straßenverlauf zwischen einem Anfangs- und Endpunkt als näherungsweise gerade betrachtet werden kann, müssen nur die beiden Punkte angegeben werden, wodurch sich die Datenmenge und die Anzahl der zu speichernden Informationen reduzieren lässt.

Während im Stand der Technik die Gestalt des Segmentes in dem jeweiligen Verfahren grundsätzlich festgelegt ist, beispielsweise als eine Gerade oder eine Klothoide, ist mit dem erfindungsgemäßen Verfahren eine variable Zuordnung der Gestalt zu dem jeweiligen Segment möglich. Dabei wird die Zuordnung oder Festlegung der Gestalt mittels einer Information bewirkt, die gleichzeitig zur Berechnung des Verlaufes der Straße verwendet werden kann. Es können also weniger Segmentanfangs- und Segmentendpunkte verwendet werden. Die Berechnung des Verlaufes wird genauer und schneller und die abzuspeichernde Datenmenge wird optimiert.

Der Endpunkt eines Segments ist vorteilhafterweise zugleich der Anfangspunkt des nächstfolgenden Segments, um nur eine minimale Datenmenge abspeichern zu müssen. Der zwischen den einzelnen Anfangs- und Endpunkten liegende Straßenverlauf wird mittels mathematischer Verfahren mit den Stützpunkten als Randwertbedingungen berechnet. Hierdurch wird eine effiziente Berechnung der Straßenkrümmungen ermöglicht, ohne dass es erforderlich ist, zusätzlich zu den Anfangs- und Endpunkten und ggf. den Stützpunkten Krümmungsinformationen abzuspeichern. Eine Einschränkung hinsichtlich der mathematischen Verfahren, die für die Berechnung geeignet sind, ist nicht gegeben. Vorzugsweise werden die Segmentverläufe mittels Geraden, Kreisbögen, Klothoiden, Polynomen oder Splines berechnet. Durch die Verwendung des erfindungsgemäßen Verfahrens wird ebenfalls ein Längenfehler verringert, der sich bei einer ausschließlich linearen Verbindung der Segmentanfangs- und Segmentendpunkte besonders auf langen, kurvenreichen Abschnitten ergibt.

Prinzipiell ist jede Anzahl von Stützpunkten möglich, und die Anzahl ist abhängig von der zugrundeliegenden. Funktion des mathematischen Verfahrens. Ein Polynom dritten Grades benötigt zwei Stützpunkte, da zusammen mit dem Anfangspunkt und dem Endpunkt insgesamt vier Punkte zur Lösung des Gleichungssystems existieren.

Falls zusätzliche Bedingungen an den Krümmungsverlauf bekannt sind, beispielsweise zweimal stetige Differenzierbarkeit, können zusätzliche Stützpunkte eingespart werden. In diesem Fall kann es aber erforderlich sein, dass Informationen im Nachbarsegment und gegebenenfalls rekursiv in deren Nachbarsegmenten berechnet werden, um eine weitere Gleichung zur Lösung des Systems zu erhalten, beispielsweise indem die Steigung an einem gemeinsamen Segmentpunkt (Endpunkt eines Segmentes, der zugleich Anfangspunkt des nächstfolgenden Segmentes ist) verwendet wird.

Um die Segmentanfangs- und Segmentendpunkte von den Stützpunkten unterscheiden zu können, sind die Stützpunkte mit Attributen versehen. Die Unterscheidung kann beispielsweise dadurch erfolgen, dass die Stützpunkte mit Flags markiert werden.

Um bereits bestehende Datensätze verwenden zu können, ist es vorgesehen, dass auf der Grundlage vorhandener, digitaler Straßenkarten die Segmentanfangs- und Segmentendpunkte neu berechnet und die Gestalt der dazwischenliegenden Segmente über die Anzahl der Stützpunkte festgelegt wird. Es werden die ursprünglichen, digitalen Straßenkarten als Ausgangsmaterial verwendet, jedoch werden die Segmentanfangs- und Segmentendpunkte ggf. neu berechnet und die Gestalt, also die grundsätzliche Form des Segmentes als z.B. Gerade, Kreisbogen oder Klothoide, zwischen den Anfangs- und Endpunkten festgelegt. Die sogenannten Shape-Points herkömmlicher Navigationssysteme können teilweise übernommen werden, so dass die Funktionen in diesen Navigationssystemen nicht geändert werden müssen bzw. die Navigationssysteme auch mit den neu erstellten digitalisierten Straßen ihre Funktionsfähigkeit beibehalten.

Eine Weiterbildung der Erfindung sieht vor, dass über zusätzliche Bedingungen hinsichtlich des Überganges an den Segmentgrenzen oder über Attribute der Segmente wie beispielsweise die Straßenklasse oder "Form of Way" (z.B. Kreisverkehr, einspurige Straße, etc) der Straßenverlauf festgelegt wird.

Nachfolgend wird das erfindungsgemäße Verfahren anhand der beigefügten Zeichnungen ausführlich beschrieben. Diese zeigen in:
Figur 1- die Darstellung eines Straßenverlaufs nach dem Stand der Technik; sowie
Figur 2 - den Straßenverlauf aus Figur 1 mit erfindungsgemäßen Segmentanfangs- und Segmentendpunkten.

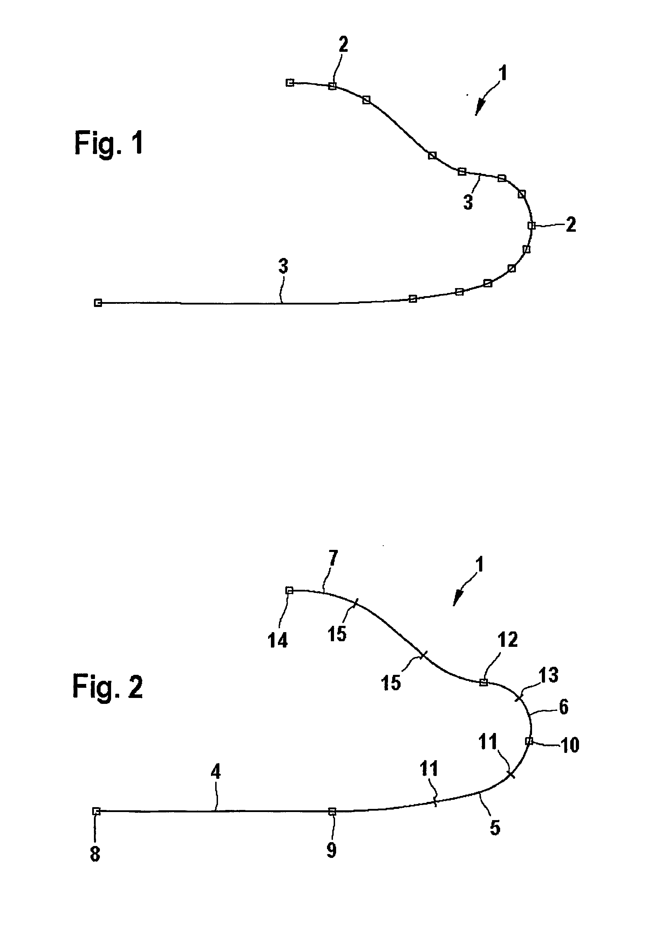

In der Figur 1 ist der Verlauf eines Straßenabschnitts 1 mit Segmentanfangs- und Segmentendpunkten 2 dargestellt, die durch kleine Quadrate symbolisiert werden. Die einzelnen Segmentanfangs- und Segmentendpunkte 2 liegen auf dem realen Verlauf der Straße. In der internen Repräsentation und der Display-Darstellung sind die Segmentanfangs- und Segmentendpunkte 2, abweichend zu der Darstellung in der Figur 1, durch geradlinige Strecken verbunden, so dass sich der Verlauf der Straße 1 als eine Zusammensetzung bzw. Aneinanderkettung linearer Abschnitte 3 ergibt. Aus Gründen der besseren Übersichtlichkeit sind nur einige Segmentanfangs- und Segmentendpunkte 2 und Straßenabschnitte 3 mit einer Bezugsziffer versehen.

Insgesamt sind zur Darstellung des Verlaufs der Straße 1 in der Figur 1 vierzehn Segmentanfangs- und Segmentendpunkte 2 erforderlich, die auf einem elektronisch auslesbaren Datenmedium, beispielsweise einer CD-ROM, gespeichert werden müssen. Besonders in kurvenreichen Straßenverläufen, in der Figur 1 am rechten Rand dargestellt, werden viele Segmentanfangs- und Segmentendpunkte 2 benötigt, um eine hinreichend genaue Darstellung des Straßenverlaufes zu erhalten.

Der Verlauf derselben Straße 1 ist in der Figur 2 wiedergegeben. Im Unterschied zur Figur 1 werden hier aber weniger Segmentanfangs- und Segmentendpunkte 8, 9, 10, 12, 14 benötigt. Der Verlauf der Straße 1 wurde in einander nachfolgende Segmente 4, 5, 6, 7 unterteilt. Die einzelnen Segmente 4 bis 7 weisen voneinander abweichende Krümmungsverläufe auf. So ist die Gestalt des Segmentes 4 eine Gerade, des Segmentes 5 ein Klothoidenübergang, der in einen Kreis des Segmentes 6 übergeht. Daran schließt sich das Segment 7 an, das die Gestalt einer Klothoide mit einer S-Kurve hat.

Die einzelnen Segmente 4 bis 7 weisen jeweils eine unterschiedliche Anzahl von Stützpunkten 11, 13, 15 auf. Das Segment 4 ist als lineares Segment durch den Anfangspunkt 8 und einen Endpunkt 9 exakt definiert. Weitere Stützpunkte sind nicht erforderlich. Der Punkt 9 ist sowohl der Endpunkt des Segmentes 4 als auch der Anfangspunkt des Segmentes 5. Das Segment 5 benötigt als Klothoidenübergang neben dem Anfangspunkt 9 und dem Endpunkt 10 zwei zusätzliche Stützpunkte 11, um mit diesen vier Randwertbedingungen (Anfangs- und Endpunkt sowie zwei Stützpunkten) den Verlauf der Straße exakt festzulegen und berechnen zu können.

Das Segment 6 ist als Kreisabschnitt durch den Anfangspunkt 10, den Endpunkt 12 und einen zusätzlichen Stützpunkt 13, der auf dem Kreisbogen liegt, genau definiert. Die Klothoide des Segmentes 7 braucht zur exakten Festlegung der Gestalt und zur Bestimmung bzw. Berechnung des Verlaufes den Anfangspunkt 12 und den Endpunkt 14 des Segmentes 7 sowie zwei zusätzliche Stützpunkte 15.

Der Verlauf der Straße 1 ist somit in der Figur 2 durch weniger Segmentanfangs- und Segmentendpunkte 8, 9, 10, 12, 14 und Stützpunkte 11, 13, 15 als in der Figur 1 definiert, nämlich durch nur fünf Anfangs- bzw. Endpunkt und fünf zusätzliche Stützpunkte. Es ist also mit einer geringeren Datenmenge eine höhere Genauigkeit erzielbar. Die Segmentanfangs- und Segmentendpunkte 8, 9, 10, 12, 14 und Stützpunkte 11,13, 15 können offline ermittelt werden.

Wird der Verlauf der Straße neu berechnet oder sollen die Segmentanfangs- und Segmentendpunkte und Stützpunkte neu und optimiert gesetzt werden, können vorhandene Segmentanfangs- und Segmentendpunkte, die nach den bisherigen Bedingungen ermittelt wurden, Krümmungsdaten, Point of Interests (POIs) und/oder Kombination(en) verschiedener Datentypen verwendet werden. Über einen Algorithmus werden die neuen Segmentanfangs- und Segmentendpunkte und Stützpunkte errechnet und gesetzt, um den Verlauf der Straße optimal berechnen zu können. Bei der Neuberechnung können fehlerhafte oder stark verrauschte Daten unberücksichtigt bleiben, um spätere Ungenauigkeiten und Berechnungsfehler möglichst gering zu halten.

Aus den ermittelten Segmentanfangs- und Segmentendpunkten und Stützpunkten kann durch Online-Berechnung der Straßenverlauf eindeutig und weniger rechenaufwändig erstellt werden. Durch die höhere Genauigkeit kann auch der Längenfehler, der bei bisherigen Navigationssystemen bei der Berechnung der Fahrtstrecke oftmals auftrat, gerade bei kurvenreichen Straßenverläufen, deutlich verringert werden.

Zudem besteht die Möglichkeit, herkömmliche Segmentanfangs- und Segmentendpunkte in der Menge der gespeicherten Daten beizubehalten, so dass die Funktionen bei den bisherigen Navigationssystemen nicht geändert werden müssen. Die neuen Stützpunkte zur Krümmungsberechnung können durch Flags oder Attribute gekennzeichnet werden, um sie von Segmentanfangs- und Segmentendpunkten zu unterscheiden. Dabei es ist auch möglich, je nach Land oder Straßenklasse unterschiedliche Krümmungsdarstellungen zu verwenden. Die Segmentanfangs- und Segmentendpunkte und Stützpunkte können dann jeweils auf die bestgeeignete Darstellung angepaßt werden.

Da mit den neuen Stützpunkten die Kurvenverläufe und Krümmungsdarstellungen eindeutig und genau berechenbar sind, können die Daten des berechneten Straßenverlaufs über Schnittstellen Fahrerassistenzsystemen, beispielsweise Kurvenwarnsystemen, Lichtsteuerungen o.ä., zur Verfügung gestellt werden.

## Patentansprüche

1. Verfahren zur Unterteilung oder Berechnung eines Straßenverlaufes anhand von digitalen Straßenkarten, bei dem die Straße in aufeinanderfolgende Segmente (4, 5, 6, 7) unterteilt ist, denen je ein Segmentanfangspunkt (8, 9, 10, 12, 14) und ein Segmentendpunkt (8, 9, 10, 12, 14) zugeordnet ist, wobei anhand der Anzahl zwischen den Segmentanfangs- und Segmentendpunkten (8, 9, 10, 12, 14) angeordneter Stützpunkte (11, 13, 15) und/oder Übergangsbedingungen zwischen den Segmenten (4, 5, 6, 7) und/oder eines Attributes die Gestalt des Segmentes (4, 5, 6, 7) festgelegt und dessen Verlauf so berechnet wird, dass sich dabei zwischen den Segmentanfangs- und Segmentendpunkten (8, 9, 10, 12, 14) die Gestalt der Segmente (4, 5, 6, 7) nicht ändert, **dadurch gekennzeichnet, dass** bei nur einem Stützpunkt (11, 13, 15) zwischen dem Segmentanfangs- und dem Segmentenpunkt das Segment (4, 5, 6, 7) als Kreisbogen und dass bei zwei Stützpunkten (11, 13, 15) das Segment (4, 5, 6, 7) als Klothoide festgelegt wird.

2. Verfahren nach Anspruch 1, **dadurch gekennzeichnet, dass** unter zusätzlicher Berücksichtigung der Lage der Stützpunkte (11, 13, 15) und der Lage der Segmentanfangs- und Segmentendpunkte (8, 9, 10, 12, 14) der Segmentverlauf berechnet wird.

3. Verfahren nach Anspruch 1 oder 2, **dadurch gekennzeichnet, dass** bei Fehlen eines Stützpunktes (11, 13, 15) zwischen dem Segmentanfangs- und dem Segmentenpunkt das Segment (4, 5, 6, 7) als eine Gerade festgelegt wird.

4. Verfahren nach einem der voranstehenden Ansprüche, **dadurch gekennzeichnet, dass** die Stützpunkte (11, 13, 15) mit Attributen versehen sind, die sie von Segmentanfangs- und Segmentendpunkten (8, 9, 10, 12, 14) unterscheiden.

5. Verfahren nach einem der voranstehenden Ansprüche, **dadurch gekennzeichnet, dass** auf der Grundlage vorhandener, digitaler Straßenkarten die Segmentanfangs- und Segmentendpunkte (8, 9, 10, 12, 14) neu berechnet werden.

6. Verfahren nach einem der voranstehenden Ansprüche, **dadurch gekennzeichnet, dass** ein Segmentendpunkt (8, 9, 10, 12, 14) eines Segmentes (4, 5, 6, 7) als Segmentanfangspunkt (8, 9, 10, 12, 14) des unmittelbar daran anschließenden Segmentes (4, 5, 6, 7) verwendet wird.

7. Verfahren nach einem der voranstehenden Ansprüche, **dadurch gekennzeichnet, dass** zur Berechnung des Verlaufes des Segmentes (4, 5, 6, 7) der Segmentanfangspunkt (8, 9, 10, 12, 14), der Segmentendpunkt (8, 9, 10, 12, 14) und die vorhandenen Stützpunkte (11, 13, 15) verwendet werden.

8. Verfahren nach einem der voranstehenden Ansprüche, **dadurch gekennzeichnet, dass** über zusätzliche Bedingungen hinsichtlich des Überganges zwischen den Segmenten (4, 5, 6, 7) oder über Attribute an den Segmenten (4, 5, 6, 7) der Straßenverlauf festgelegt wird.

## Claims

1. Method for dividing or calculating a road profile using digital road maps, in which the road is divided into successive segments (4, 5, 6, 7) which each have an associated segment starting point (8, 9, 10, 12, 14) and segment ending point (8, 9, 10, 12, 14), wherein the number of interpolation points (11, 13, 15) arranged between the segment starting and segment ending points (8, 9, 10, 12, 14) and/or transition conditions between the segments (4, 5, 6, 7) and/or an attribute is/are used to stipulate the form of the segment (4, 5, 6, 7) and to calculate the profile thereof such that the form of the segments (4, 5, 7) does not change between the segment starting and segment ending points (8, 9, 10, 12, 14) in this case, **characterized in that** if there is only one interpolation point (11, 13, 15) between the segment starting and segment ending points then the segment (4, 5, 6, 7) is stipulated as a circular arc and **in that** if there are two interpolation points (11, 13, 15) then the segment (4, 5, 6, 7) is stipulated as a clothoid.

2. Method according to Claim 1, **characterized in that** the segment profile is calculated by additionally taking account of the position of the interpolation points (11, 13, 15) and the position of the segment starting and segment ending points (8, 9, 10, 12, 14).

3. Method according to Claim 1 or 2, **characterized in that** in the absence of a interpolation point (11, 13, 15) between the segment starting and segment ending points the segment (4, 5, 6, 7) is stipulated as a straight line.

4. Method according to one of the preceding claims, **characterized in that** the interpolation points (11, 13, 15) are provided with attributes which distinguish them from segment starting and segment ending points (8, 9, 10, 12, 14).

5. Method according to one of the preceding claims, **characterized in that** the segment starting and segment ending points (8, 9, 10, 12, 14) are recalculated on the basis of available, digital road maps.

6. Method according to one of the preceding claims, **characterized in that** a segment ending point (8, 9, 10, 12, 14) for a segment (4, 5, 6, 7) is used as segment starting point (8, 9, 10, 12, 14) for the immediately subsequent segment (4, 5, 6, 7).

7. Method according to one of the preceding claims, **characterized in that** the segment starting point (8, 9, 10, 12, 14), the segment ending point (8, 9, 10, 12, 14) and the available interpolation points (11, 13, 15) are used for calculating the profile of the segment (4, 5, 6, 7).

8. Method according to one of the preceding claims, **characterized in that** additional conditions for the transition between the segments (4, 5, 6, 7) or attributes on the segments (4, 5, 6, 7) are used to stipulate the road profile.

## Revendications

1. Procédé de division ou de calcul d'un parcours routier à l'aide de carte routière numérique, dans lequel la route est divisée en segments successifs (4, 5, 6, 7) à chacun desquels sont associés un point initial de segment (8, 9, 10, 12, 14) et un point final de segment (8, 9, 10, 12, 14), la forme du segment (4, 5, 6, 7) étant définie et son parcours étant calculé à l'aide du nombre de points d'appui (11, 13, 15) disposés entre le point de début de segment et le point de fin de segment (8, 9, 10, 12, 14) et/ou à l'aide des conditions de transition entre les segments (4, 5, 6, 7) et/ou d'un attribut, la forme des segments (4, 5, 6, 7) ne se modifiant pas entre le point de début de segment et le point de fin de segment (8, 9, 10, 12, 14),
**caractérisé en ce que**
le segment (4, 5, 6, 7) est défini comme arc de cercle lorsqu'il y a un seul point d'appui (11, 13, 15) entre le point de début de segment et le point de fin de segment et
**en ce que** le segment (4, 5, 6, 7) est défini comme clothoïde lorsqu'il y a deux points d'appui (11, 13, 15).

2. Procédé selon la revendication 1, **caractérisé en ce que** le parcours du segment est calculé en tentant compte en supplément de la position des points d'appui (11, 13, 15) et de la position du point de début de segment et du point de fin de segment (8, 9, 10, 12, 14).

3. Procédé selon les revendications 1 ou 2, **caractérisé en ce que** le segment (4, 5, 6, 7) est défini comme étant une droite lorsqu'il n'y a pas de point d'appui (11, 13, 15) entre le point de début de segment et le point de fin de segment.

4. Procédé selon l'une des revendications précédentes, **caractérisé en ce que** les points d'appui (11, 13, 15) sont dotés d'attributs qui les distinguent des points de début de segment et des points de fin de segment (8, 9, 10, 12, 14).

5. Procédé selon l'une des revendications précédentes, **caractérisé en ce que** les points de début de segment et les points de fin de segment (8, 9, 10, 12, 14) sont recalculés sur base des cartes routières numériques disponibles.

6. Procédé selon l'une des revendications précédentes, **caractérisé en ce qu'**un point de fin de segment (8, 9, 10, 12, 14) d'un segment (4, 5, 6, 7) est utilisé comme point de début de segment (8, 9, 10, 12, 14) du segment (4, 5, 6, 7) immédiatement suivant.

7. Procédé selon l'une des revendications précédentes, **caractérisé en ce que** le point de début de segment (8, 9, 10, 12, 14), le point de fin de segment (8, 9, 10, 12, 14) et les points d'appui existants (11, 13, 15) sont utilisés pour le calcul du parcours du segment (4, 5, 6, 7) .

8. Procédé selon l'une des revendications précédentes,
**caractérisé en ce que** le parcours routier est défini par l'intermédiaire de conditions supplémentaires concernant la transition entre les segments (4, 5, 6, 7) ou par l'intermédiaire d'attributs attribués aux segments (4, 5, 6, 7).
